# EUROPÄISCHE PATENTSCHRIFT

(11) **EP 3 770 646 B1**
(45) Veröffentlichungstag und Bekanntmachung des Hinweises auf die Patenterteilung: **21.07.2021**
(21) Anmeldenummer: 20167898.4
(22) Anmeldetag: 03.04.2020
(51) Int. Cl.: G01V 3/20

(54) **LICHTVORHANG**
LIGHT CURTAIN
RIDEAU LUMINEUX

(30) Priorität: 25.07.2019 DE 202019104104 U
(43) Veröffentlichungstag der Anmeldung: 27.01.2021
(73) Patentinhaber: Leuze electronic GmbH + Co. KG, 73277 Owen/Teck (DE)
(72) Erfinder: Olbrich, Sebastian, 80992 München (DE)
(74) Vertreter: Ruckh, Rainer Gerhard

(56) Entgegenhaltungen:
- EP-A2- 2 444 825
- EP-A2- 2 527 879
- DE-A1- 2 223 591
- DE-A1- 4 100 280

## Beschreibung

Die Erfindung betrifft einen Lichtvorhang gemäß dem Oberbegriff des Anspruchs 1.

Ein derartiger Lichtvorhang dient zur Überwachung von Objekten in einem Überwachungsbereich. Insbesondere ist der Lichtvorhang als Sicherheits-Lichtvorhang ausgebildet, der im Bereich der Sicherheitstechnik zur Überwachung von Gefahrenbereichen eingesetzt wird. Der Lichtvorhang umfasst eine Anordnung von Sendern die im Gehäuse einer Sendereinheit untergebracht sind. Weiterhin ist eine Anordnung von Empfängern vorgesehen, die in einem Gehäuse einer Empfängereinheit untergebracht sind. Die Sender- und Empfängereinheiten sind an gegenüberliegenden Rändern des Überwachungsbereichs angeordnet. Der Betrieb des Lichtvorhangs erfolgt derart, dass die Strahlachsen, das heißt die Sender und Empfänger der einzelnen Strahlachsen, zyklisch einzeln nacheinander aktiviert werden. Bei freiem Überwachungsbereich sind die von einem Sender emittierten Lichtstrahlen auf einen zugeordneten Empfänger geführt. Der Sender und der zugeordnete Empfänger bilden eine Strahlachse. Zur Objektdetektion werden in der Auswerteeinheit die Empfangssignale der Empfänger ausgewertet und in Abhängigkeit hiervon als Objektfeststellungssignal ein binäres Schaltsignal generiert, dessen Schaltzustände angeben, ob sich ein Objekt im Überwachungsbereich befindet oder nicht. Ein Objekteingriff liegt vor, wenn wenigstens eine Strahlachse durch ein Objekt unterbrochen ist.

Aus der EP 2 444 825 A2, der DE 41 00 280 sowie der EP 2 527 879 sind jeweils ein Lichtvorhang bekannt, bei welchem Sender eine Senderkaskade bilden.

Die Sender sind mittels einer ersten Ansteuerschaltung ohne strombegrenzenden Widerstand in deren Strompfad direkt einzeln oder zu mehreren aktivierbar. Der Sendestrom wird zentral vorgegeben und ist für die einzelnen Sender individuell anpassbar. Die Empfänger bilden wenigstens eine Empfängerkaskade. Die Empfänger sind mittels einer zweiten Ansteuerschaltung einzeln oder zu mehreren aktivierbar. Die Empfangssignale werden ohne einzelne Vorverstärkung, Analogschalter und/oder Impedanzwandler pro Empfänger einem gemeinsamen Gruppenverstärker zugeführt.

Der Erfindung liegt die Aufgabe zugrunde, einen Lichtvorhang der eingangsgenannten Art hinsichtlich seiner Funktionalität zu verbessern.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Lichtvorhang mit einer Sendereinheit, welche eine Reihenanordnung von Lichtstrahlen emittierenden Sendern aufweist, mit einer Empfängereinheit, welche eine Reihenanordnung von Lichtstrahlen empfangenden Empfängern aufweist und mit einer Auswerteeinheit, in welcher in Abhängigkeit von Empfangssignalen der Empfänger ein Objektfeststellungssignal generiert wird. Den Empfängern ist eine Anordnung mit Verstärkern zugeordnet, dass den einzelnen Empfängern Ansteuerelemente zugeordnet sind, die von Steuermitteln gesteuert sind. Der oder die Verstärker beziehen ihre Spannungsversorgung aus einem Potential P1 und ihren Massebezug aus einem Potential P2. Die Ansteuerelemente beziehen ihre Spannungsversorgung aus einem Potential P3 und ihren Massebezug aus einem Potential P4. Das Potential P1 ist höher als das Potential P3. Das Potential 3 ist höher als das Potential 2. Das Potential P2 ist höher als das Potential P 4.

Ein wesentlicher Aspekt der Erfindung besteht darin, dass zur Spannungsversorgung der empfangsseitigen elektronischen Bauelemente nur positive Spannungen eingesetzt werden. Dies führt zu einer erhöhten Funktionalität des erfindungsgemäßen Lichtvorhangs im Vergleich zu bekannten Lichtvorhängen wie zum Beispiel in der EP 2 444 825 A2 beschrieben, wo negative Hilfsspannungen verwendet werden, insbesondere zur Spannungsversorgung von Ansteuer-Flip-Flops zur Ansteuerung einzelner Empfänger des Lichtvorhangs.

Dadurch, dass bei dem erfindungsgemäßen Lichtvorhang die Spannungsversorgung von empfangsseitigen elektronischen Komponenten nur mit positiven Spannungen erfolgt, erhält die Anordnung der Verstärker eine hohe Betriebsspannung und auch die vorzugsweise von Fotodioden gebildeten Empfänger erhalten hohe Sperrspannungen.

Die Verstärker erhalten dadurch einen höheren Dynamikbereich und die Nachweisempfindlichkeit bei der Objektdetektion mit den Empfängern wird durch die hohen Sperrspannungen der Fotodioden erhöht.

Ein weiterer Vorteil der Erfindung besteht darin, dass sich die zur Spannungsversorgung benötigten positiven Spannungen konstruktiv einfach durch Netzteile realisieren lassen.

Die Netzteile sind von elektrischen Schaltnetzteilen wie zum Beispiel Linearnetzteilen gebildet.

Vorteilhaft werden dabei die Potentiale P1, P2, P3 jeweils mit einem Netzteil generiert.

Um die Netzteile selbst mit Spannung zu versorgen, können diese an eine Spannungsversorgungseinheit angeschlossen sein.

Die Netzteile können alle direkt an eine Spannungsversorgungseinheit sein. Alternativ sind die Netzteile kaskadiert angeordnet.

Gemäß einer weiteren Ausgestaltung sind die Netzteile einzeln oder gemeinsam an ein Versorgungs-Netzteil mit höherer Spannung als die Potentiale P1, P2, P3 angeschlossen.

Gemäß einer vorteilhaften Ausführungsform weist die Anordnung von Verstärkern wenigstens einen Vorverstärker auf, welcher seine Spannungsversorgung aus dem Potential P1 und seinen Massebezug aus dem Potential 2 bezieht.

Prinzipiell kann nur ein Vorverstärker vorgesehen sein.

Alternativ ist nur ein gemeinsamer Vorverstärker für alle Empfänger vorgesehen.

Vorteilhaft ist jedem Empfänger ein Vorverstärker zugeordnet.

Durch die Spannungsversorgung des Sammelverstärkers mit einer positiven Spannung erhält dieser einer hohe Betriebsspannung, wodurch dieser einen hohen Dynamikbereich bei der Verstärkung der Empfangssignale der einzelnen Empfänger hat, was eine wesentliche Voraussetzung für eine hohe Nachweisempfindlichkeit bei den Objektdetektionen mit den Empfängern ist.

Die Ansteuerung und Aktivierung der Empfänger erfolgt über die Steuermittel. Dabei sind die Ansteuerelemente mittels der Steuermittel adressierbar. Ein Empfänger ist dann aktiviert, wenn das zugehörige Ansteuerelement adressiert ist.

Die Empfänger werden, insbesondere durch eine optische Synchronisierung, zusammen mit zugeordneten Sendern der Sendereinheit aktiviert um Objektdetektionen in einem Überwachungsbereich durchzuführen.

Generell sind dabei die Sendereinheiten und die Empfängereinheiten an gegenüberliegenden Rändern des Überwachungsbereichs angeordnet.

Dabei bildet vorteilhaft jeweils ein Sender mit einem zugeordneten Empfänger eine Strahlachse, wobei die räumliche Anordnung derart ist, dass bei einem freien Überwachungsbereich die Lichtstrahlen eines Senders ungehindert zum Empfänger dieser Strahlachse gelangen. Bei einem Objekteingriff im Überwachungsbereich wird wenigstens eine Strahlachse unterbrochen, was in der Auswerteeinheit durch eine Schwellwertbewertung der Empfangssignale der Empfänger erkannt wird, so dass in der Auswerteeinheit ein entsprechendes Objektfeststellungssignal generiert wird.

Für eine fortlaufende Objektdetektion im Überwachungsbereich werden die Sender und Empfänger zyklisch aktiviert.

Je nach Betrieb der Steuermittel können dabei die Empfänger innerhalb eines Zyklus einzeln oder in Gruppen aktiviert werden.

Die Steuermittel können von einer Logikschaltung oder einem Prozessor gebildet sein. Die Ansteuerelemente sind vorteilhaft als Ansteuer-Flip-Flops ausgebildet.

Die Empfänger bestehen aus Fotodioden, wobei vorteilhaft jeder Fotodiode eine Entkopplungsdiode zugeordnet ist.

Die Ansteuerung über die Steuermittel erfolgt derart, dass durch eine Adressierung eines Ansteuerelements die zugehörige Fotodiode aktiviert und die zugehörige Entkopplungsdiode separiert ist.

Die Fotodiode ist dann in den Sperrbetrieb geschaltet und die Entkopplungsdiode schaltet den Fotostrom der Fotodiode zum Verstärker, insbesondere zum Vorverstärker durch.

Ist dagegen ein Empfänger nicht adressiert, ist die Fotodiode in Durchlassrichtung (Fotoelementbetrieb) geschaltet und die Entkopplungsdiode trennt die Fotodiode vom Vorverstärker.

Dadurch ist gewährleistet, dass nur die Fotoströme der adressierten Empfänger zum Vorverstärker gelangen, dort verstärkt werden und dann der Auswerteeinheit zur Auswertung zugeführt werden.

Durch die mit den Entkopplungsdioden bewirkten Entkopplungen von Vorverstärkern ist weiterhin gewährleistet, dass keine kapazitiv eingekoppelten Störsignale zum Vorverstärker gelangen, wodurch Signalverfälschungen und dadurch bedingt Fehldetektionen vermieden werden.

In der Auswerteeinheit wird abhängig von den Empfangssignalen der Empfänger ein Objektfeststellungssignal generiert. Das Objektfeststellungssignal ist vorteilhaft als binäres Schaltsignal ausgebildet, dessen Schaltzustände angeben, ob sich ein Objekt im Überwachungsbereich befindet oder nicht.

Für den Einsatz in sicherheitstechnischen Applikationen, insbesondere im Bereich des Personenschutzes, ist der Lichtvorhang als Sicherheits-Lichtvorhang ausgebildet. Der Sicherheits-Lichtvorhang weist einen fehlersicheren Aufbau auf, was insbesondere durch eine redundante, zweikanalige Auswerteeinheit in Form zweier sich zyklisch überwachender Rechnereinheiten erreicht wird.

Die Erfindung wird im Folgenden anhand der Zeichnungen erläutert. Es zeigen:
- Figur 1: Ausführungsbeispiel des erfindungsgemäßen Lichtvorhangs.
- Figur 2: Steuerschaltung für die Empfänger des Lichtvorhangs gemäß Figur 1.
- Figur 3: Erstes Beispiel einer Spannungsversorgungseinheit für Netzteile der Stromschaltung gemäß Figur 2.
- Figur 4: Zweites Beispiel einer Spannungsversorgungseinheit für Netzteile der Stromschaltung gemäß Figur 2.

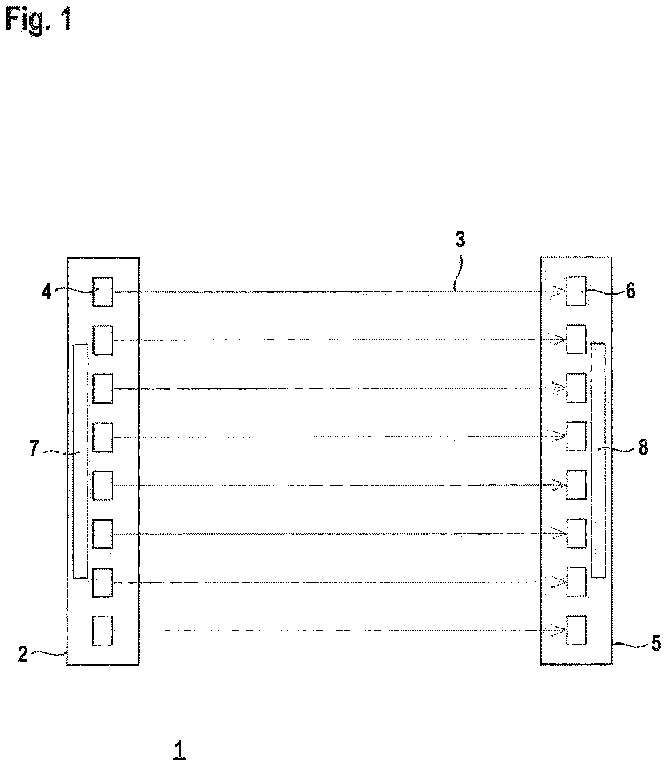

Figur 1 zeigt den prinzipiellen Aufbau eines Ausführungsbeispiels des erfindungsgemäßen Lichtvorhangs 1. Der Lichtvorhang 1 umfasst eine Sendereinheit 2, in deren Gehäuse eine Reihenanordnung von Lichtstrahlen 3 emittierenden Sendern 4 in Form von Sendedioden angeordnet ist. Die Sendedioden 4 sind von Leuchtdioden oder dergleichen gebildet. Der Lichtvorhang 1 weist weiterhin eine Empfängereinheit 5 auf, in deren Gehäuse eine Reihenanordnung von Lichtstrahlen 3 empfangenden Empfängern 6 in Form von Empfangsioden vorgesehen ist. Die Empfangsdioden 6 sind von Fotodioden 61, 62...gebildet. Prinzipiell können die Empfangsdioden auch von Foto-PIN-Dioden gebildet sein.

Die Sendereinheit 2 und die Empfängereinheit 5 sind an den gegenüberliegenden Rändern eines Überwachungsbereichs angeordnet. Bei freiem Überwachungsbereich treffen die von jeweils einem Sender 4 emittierten Lichtstrahlen 3 auf einen zugeordneten gegenüberliegenden Empfänger 6. Ein Sender 4 und der zugeordnete Empfänger 6 bilden jeweils eine Strahlachse. Der Senderbetrieb wird durch eine Steuereinheit 7 in der Sendereinheit 2 gesteuert und bewertet. Der Empfängerbetrieb wird durch eine Steuer- und Auswerteeinheit 8 in der Empfängereinheit 5 gesteuert und bewertet. Die Sender 4 und Empfänger 6 der einzelnen Strahlachsen werden durch eine optische Synchronisierung des Lichtvorhangs 1 zyklisch einzeln oder zu mehreren nacheinander aktiviert. Die Steuer- und Auswerteeinheit 8 weist eine Auswerteeinheit auf.

In der Auswerteeinheit werden hierzu die Empfangssignale der Fotodioden 61, 62 ausgewertet, um als Objektfeststellungssignal ein binäres Schaltsignal zu erzeugen. Der erste Schaltzustand entspricht einer Objektmeldung, der zweite Schaltzustand einem freien Schutzfeld.

Der Lichtvorhang 1 bildet einen Sicherheitssensor für den Einsatz im Bereich der Sicherheitstechnik. Hierzu weist der Lichtvorhang 1 einen fehlersicheren Aufbau auf. Insbesondere weist die Auswerteeinheit einen mehrkanaligen, redundanten Aufbau auf, beispielsweise in Form zweier sich zyklisch überwachender Rechnereinheiten.

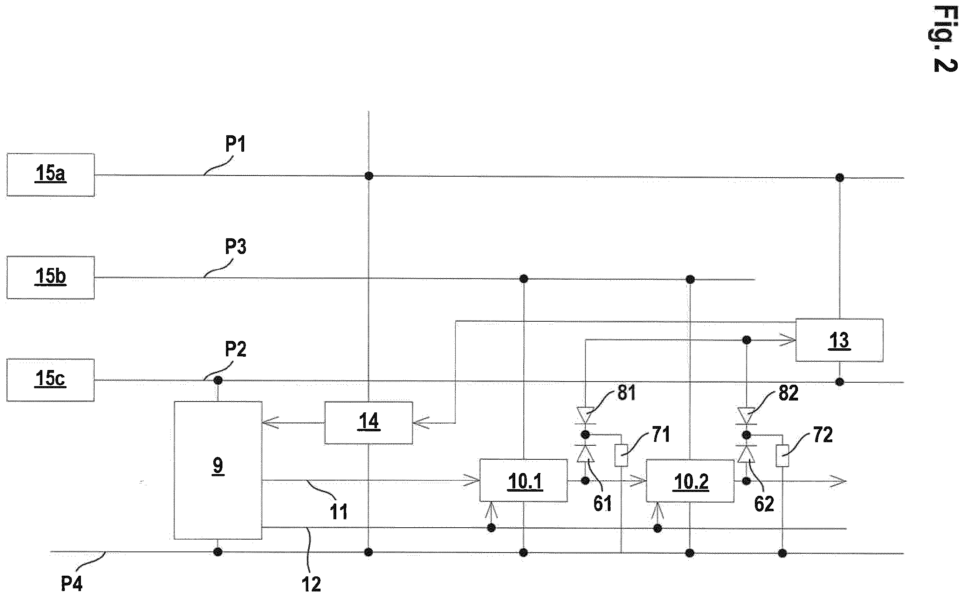

Figur 2 zeigt den Aufbau einer Steuerschaltung als Bestandteil der Steuer- und Auswerteeinheit 8, wobei die Steuerschaltung zur Steuerung des Betriebs der Empfänger 6 des Lichtvorhangs 1 dient. Der Übersichtlichkeit halber sind in Figur 2 nur zwei der Empfänger 6 des Lichtvorhangs 1 dargestellt. Dabei sind die Empfänger 6 von Fotodioden 61, 62 gebildet, die mit den Bezugsziffern 61, 62, .. bezeichnet sind.

Wie Figur 2 zeigt, ist jeder Fotodiode 61, 62 ein Arbeitswiderstand 71, 72 sowie eine Entkopplungsdiode 81, 82 zugeordnet.

Zur Ansteuerung der Empfänger 6 sind Steuermittel 9 sowie Ansteuerelemente in Form von Ansteuer-Flip-Flops 10.1, 10.2 vorgesehen.

Die Steuermittel 9 können von einer Logikschaltung oder einem Prozessor gebildet sein. Jedem Empfänger 6, das heißt jeder Fotodiode 61, 62 mit zugeordneten Arbeitswiderstand 71, 72 und Entkopplungsdiode 81, 82 ist ein Ansteuer-Flip-Flop 10.1, 10.2 zugeordnet. Die Ansteuer-Flip-Flops 10.1, 10.2 werden mit den Steuermitteln 9 über eine Taktleitung 12 und eine Steuerleitung 11 angesteuert.

Im vorliegenden Fall ist den einzelnen Fotodioden 61, 62 ein gemeinsamer Vorverstärker 13 zur Vorverstärkung der Empfangssignale aller Fotodioden 61, 62 vorgesehen. Generell kann auch jeder Fotodiode 61, 62 ein Vorverstärker 13 zugeordnet sein.

Die im Vorverstärker 13 vorverstärkten Empfangssignale werden einem Sammelverstärker 14 zugeführt, Die dort nochmals verstärkten Empfangssignale werden den Steuermitteln 9 zugeführt und von dort in die Auswerteeinheit eingelesen.

Zur Spannungsversorgung der Komponenten der Steuerschaltung sind drei Netzteile 15a, 15b, 15c vorgesehen. Die Netzteile können identisch oder unterschiedlich ausgebildet sein. Die Netzteile sind als elektronische Schaltnetzteile oder lineare Spannungsregler ausgebildet.

Das erste Netzteil 15a generiert als Versorgungsspannung ein Potential P1. Das zweite Netzteil 15b generiert als Versorgungsspannung ein Potential P3. Das dritte Netzteil generiert als Versorgungsspannung ein Potential P2.

Erfindungsgemäß bezieht der Vorverstärker 13 seine Spannungsversorgung aus dem Potential P1 und seinen Massebezug aus dem Potential P2. Der Sammelverstärker 14 bezieht eine Spannungsversorgung aus dem Potential P1 und seinen Massebezug aus dem Potential P4. Erfindungsgemäß beziehen die Ansteuer-Flip-Flops 10.1, 10.2 ihre Spannungsversorgung aus dem Potential P3 und ihren Massebezug aus dem Potential P4. Die Steuermittel 9 beziehen ihre Spannungsversorgung aus dem Potential P2 und ihren Massebezug aus dem Potential P4.

Durch die erfindungsgemäße Spannungsversorgung werden alle Komponenten der Steuerschaltung mit positiven Spannungen versorgt. Dadurch wird ein hoher Dynamikbereich des Sammelverstärkers 14 erhalten. Zudem erhalten die Fotodioden 61, 62, wenn sie aktiviert sind eine hohe Sperrspannung. Dadurch wird eine hohe Nachweisempfindlichkeit bei der Objektdetektion erhalten.

Die einzelnen Ansteuer-Flip-Flops 10.1, 10.2 werden von den Steuermitteln 9 adressiert, wodurch die einen adressierten Ansteuer-Flip-Flops 10.1, 10.2 zugeordnete Ansteuer-Flip-Flops10.1, 10.2 aktiviert wird.

Ist ein Ansteuer-Flip-Flop 10.1, 10.2 adressiert, wird die zugeordnete Fotodiode 61, 62 durch den inaktiven Ausgang des Ansteuer-Flip-Flops 10.1, 10.2 in den Sperrbetrieb geschaltet. Gleichzeitig schaltet die Entkopplungsdiode den Fotostrom der Fotodiode 61, 62 zum Vorverstärker 13 durch.

Bei einem nicht adressierten Ansteuer-Flip-Flop 10.1, 10.2 ist dessen Ausgang aktiv und die Fotodiode 61, 62 wird mittels des Arbeitswiderstands in den Fotoelementbetrieb (Durchlassrichtung) geschaltet. Gleichzeitig trennt die Entkopplungsdiode die Fotodiode 61, 62 vom Vorverstärker 13.

Durch die Adressierung können die Fotodioden 61, 62 einzeln aktiviert werden. Nicht aktivierte Fotodioden 61, 62 werden über die Entkopplungsdiode von Vorverstärkern 13 gesteuert. Dadurch wird auch eine kapazitive Einkopplung von Störsignalen in den Vorverstärker 13 vermieden.

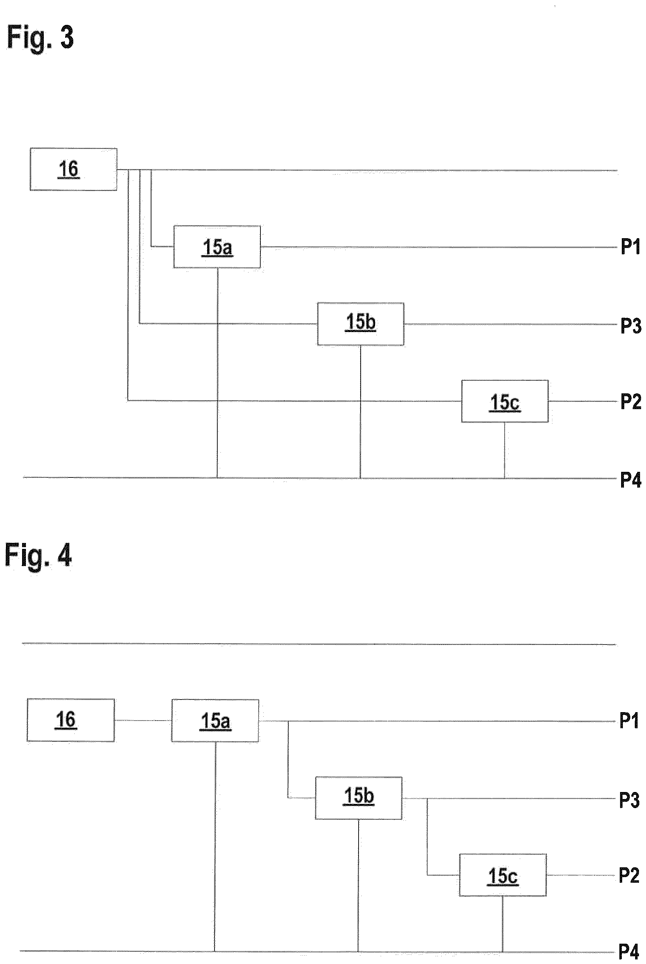

Die Figuren 3 und 4 zeigen Ausführungsbeispiele von Anschlüssen der Netzteile 15a - c an eine Spannungsversorgungseinheit 16.

Bei der Ausführungsform gemäß Figur 3 sind alle Netzteile direkt an die Spannungsversorgungseinheit 16 angeschlossen.

Bei der Ausführungsform gemäß 4 ist eine kaskadierte Anordnung derart vorgesehen, dass nur das Netzteil 15a direkt an die Spannungsversorgungseinheit 16 angeschlossen ist. Das Netzteil 15c ist an das Netzteil 15b, das Netzteil 15b an das Netzteil 15a angeschlossen, so dass die Netzteile 15b, 15c indirekt über weitere Netzteile 15a, 15b an die Spannungsversorgungseinheit 16 angeschlossen sind.

### B ezugszei chenli ste

- (1): Lichtvorhang
- (2): Sendereinheit
- (3): Lichtstrahlen
- (4): Sender
- (5): Empfängereinheit
- (6): Empfänger
- (7): Steuereinheit
- (8): Steuer- und Auswerteeinheit
- (9): Steuermittel
- (10.1): Ansteuer-Flip-Flop
- (10.2): Ansteuer-Flip-Flop
- (11): Steuerleitung
- (12): Taktleitung
- (13): Vorverstärker
- (14): Sammelverstärker
- (15a-c): Netzteil
- (16): Spannungsversorgungseinheit

- (61, 62, ...): Empfänger von Fotodiode
- (71, 72): Arbeitswiderstand
- (81, 82): Entkopplungsdiode

## Patentansprüche

1. Lichtvorhang (1) mit einer Sendereinheit (2), welche eine Reihenanordnung von Lichtstrahlen (3) emittierenden Sendern (4) aufweist, mit einer Empfängereinheit (5), welche eine Reihenanordnung von Lichtstrahlen (3) empfangenden Empfängern (6) aufweist und mit einer Auswerteeinheit, in welcher in Abhängigkeit von Empfangssignalen der Empfänger (6) ein Objektfeststellungssignal generiert wird, wobei den Empfängern (6) eine Anordnung mit Verstärkern zugeordnet ist, den einzelnen Empfängern (6) Ansteuerelemente zugeordnet sind, die von Steuermitteln (9) gesteuert sind, **dadurch gekennzeichnet dass** der oder die Verstärker ihre Spannungsversorgung aus einem Potential P1 und ihren Massebezug aus einem Potential P2 beziehen, dass die Ansteuerelemente ihre Spannungsversorgung aus einem Potential P3 und ihren Massebezug aus einem Potential P4 beziehen, wobei das Potential P1 höher als das Potential P3 ist und das Potential P3 höher als das Potential P2 ist und wobei das Potential P2 höher als das Potential P4 ist.

2. Lichtvorhang (1) nach Anspruch 1, **dadurch gekennzeichnet, dass** die Anordnung von Verstärkern wenigstens einen Vorverstärker (13) aufweist, welcher eine Spannungsversorgung aus dem Potential P1 und einem Massebezug aus dem Potential P2 bezieht.

3. Lichtvorhang (1) nach Anspruch 2, **dadurch gekennzeichnet, dass** nur ein Vorverstärker (13) vorgesehen ist, oder dass jedem Empfänger (6) ein Vorverstärker (13) zugeordnet ist.

4. Lichtvorhang (1) nach einem der Ansprüche 1 - 3, **dadurch gekennzeichnet, dass** die Anordnung von Verstärkern einen Sammelverstärker (14) aufweist, welcher seine Spannungsversorgung aus dem Potential P1 und seinen Massebezug aus dem Potential P4 bezieht.

5. Lichtvorhang (1) nach einem der Ansprüche 1 - 4, **dadurch gekennzeichnet, dass** die Ansteuerelemente von Ansteuer-Flip-Flops (10.1, 10.2) gebildet sind.

6. Lichtvorhang (1) nach einem der Ansprüche 1 - 5, **dadurch gekennzeichnet, dass** die Ansteuerelemente mittels der Steuermittel (9) adressierbar sind.

7. Lichtvorhang (1) nach Anspruch 6, **dadurch gekennzeichnet, dass** ein Empfänger (6) dann aktiviert ist, wenn das zugehörige Ansteuerelement adressiert ist.

8. Lichtvorhang (1) nach einem der Ansprüche 1 - 7, **dadurch gekennzeichnet, dass** die Empfänger (6) von Fotodioden (61, 62) gebildet sind, wobei jeder Fotodiode (61, 62) eine Entkopplungsdiode zugeordnet ist.

9. Lichtvorhang (1) nach Anspruch 8, **dadurch gekennzeichnet, dass** die Fotodioden (61, 62) mit den Entkopplungsdioden von dem oder den Vorverstärkern (13) separierbar sind.

10. Lichtvorhang (1) nach Anspruch 9, **dadurch gekennzeichnet, dass** kapazitiv eingekoppelte Störsignale von dem oder den Vorverstärkern (13) separierbar sind.

11. Lichtvorhang (1) nach einem der Ansprüche 8 - 10, **dadurch gekennzeichnet, dass** durch eine Adressierung eines Ansteuerelements die zugehörige Fotodiode (61, 62) aktiviert und die zugehörige Entkopplungsdiode separiert ist.

12. Lichtvorhang (1) nach einem der Ansprüche 1 - 11, **dadurch gekennzeichnet, dass** die Potentiale P1, P2, P3 jeweils mit einem Netzteil 15a - c generiert werden, wobei die Netzteile 15a - c an eine Spannungsversorgungseinheit (16) angeschlossen sind.

13. Lichtvorhang (1) nach Anspruch 12, **dadurch gekennzeichnet, dass** die Netzteile 15a - c einzeln oder gemeinsam an ein Versorgungs-Netzteil mit höherer Spannung als die Potentiale P1, P2, P3 angeschlossen sind.

14. Lichtvorhang (1) nach einem der Ansprüche 12 oder 13, **dadurch gekennzeichnet, dass** die Netzteile 15a - c kaskadiert angeordnet sind.

15. Lichtvorhang (1) nach einem der Ansprüche 1 - 14, **dadurch gekennzeichnet, dass** dieser als Sicherheits-Lichtvorhang (1) ausgebildet ist.

## Claims

1. A light curtain (1) having a transmitter unit (2) which has a series arrangement of transmitters (4) emitting light beams (3), having a receiver unit (5) which has a series arrangement of receivers (6) receiving light beams (3), and having an evaluation unit in which an object detection signal is generated as a function of received signals from the receivers (6),
the receivers (6) being assigned an arrangement with amplifiers, since the individual receivers (6) are assigned drive elements which are controlled by control means (9), **characterised in that** the amplifier or amplifiers obtain their voltage supply from a potential P1 and their earth reference from a potential P2, **in that** the control elements draw their voltage supply from a potential P3 and their earth reference from a potential P4, the potential P1 being higher than the potential P3 and the potential P3 being higher than the potential P2 and the potential P2 being higher than the potential P4.

2. The light curtain (1) according to claim 1, **characterised in that** the arrangement of amplifiers comprises at least one preamplifier (13) which draws a voltage supply from the potential P1 and a ground reference from the potential P2.

3. The light curtain (1) according to claim 2, **characterised in that** only one preamplifier (13) is provided, or **in that** a preamplifier (13) is assigned to each receiver (6).

4. The light curtain (1) according to one of the claims 1 to 3, **characterised in that** the arrangement of amplifiers comprises a collective amplifier (14) which obtains its voltage supply from the potential P1 and its earth reference from the potential P4.

5. The light curtain (1) according to one of the claims 1 to 4, **characterised in that** the drive elements are formed by drive flip-flops (10.1, 10.2).

6. The light curtain (1) according to one of the claims 1 to 5, **characterised in that** the control elements are addressable by means of the control means (9).

7. The light curtain (1) according to claim 6, **characterised in that** a receiver (6) is activated when the associated control element is addressed.

8. The light curtain (1) according to any one of claims 1 to 7, **characterised in that** the receivers (6) are formed by photodiodes (61, 62), each photodiode (61, 62) being associated with a decoupling diode.

9. The light curtain (1) according to claim 8, **characterised in that** the photodiodes (61, 62) with the decoupling diodes can be separated from the preamplifier or preamplifiers (13).

10. The light curtain (1) according to claim 9, **characterised in that** capacitively coupled interference signals can be separated from the preamplifier or preamplifiers (13).

11. The light curtain (1) according to any one of claims 8-10, **characterised in that** the associated photodiode (61, 62) is activated and the associated decoupling diode is separated by addressing a drive element.

12. The light curtain (1) according to one of the claims 1 to 11, **characterised in that** the potentials P1, P2, P3 are each generated with a power supply unit 15a - c, the power supply units 15a - c being connected to a voltage supply unit (16).

13. The light curtain (1) according to claim 12, **characterised in that** the power supply units 15a - c are connected individually or jointly to a supply power unit with a higher voltage than the potentials P1, P2, P3.

14. The light curtain (1) according to one of the claims 12 or 13, **characterised in that** the power supply units 15a - c are arranged in cascade.

15. The light curtain (1) according to one of the claims 1 to 14, **characterised in that** it is **characterised in that** it is designed as a safety light curtain (1).

## Revendications

1. Rideau lumineux (1) avec une unité d'émission (2) qui présente une série d'émetteurs (4) émettant des rayons lumineux (3), avec une unité de réception (5) qui présente une série de récepteurs (6) recevant des rayons lumineux (3), et avec une unité d'évaluation dans laquelle un signal de détection d'objet est généré en fonction des signaux reçus des récepteurs (6),
les récepteurs (6) étant associés à un agencement d'amplificateurs, des éléments de commande étant associés aux différents récepteurs (6), lesquels sont commandés par des moyens de commande (9), **caractérisé en ce que** le ou les amplificateurs sont alimentés en tension par un potentiel P1 et leur référence de masse par un potentiel P2, **en ce que** les éléments de commande sont alimentés en tension par un potentiel P3 et leur référence de masse par un potentiel P4, le potentiel P1 étant supérieur au potentiel P3 et le potentiel P3 étant supérieur au potentiel P2 et le potentiel P2 étant supérieur au potentiel P4.

2. Rideau lumineux (1) selon la revendication 1, **caractérisé en ce que** l'ensemble des amplificateurs comprend au moins un préamplificateur (13) qui tire une alimentation en tension du potentiel P1 et une référence de masse du potentiel P2.

3. Rideau lumineux (1) selon la revendication 2, **caractérisé en ce qu'**un seul préamplificateur (13) est prévu, ou **en ce qu'**un préamplificateur (13) est affecté à chaque récepteur (6).

4. Rideau lumineux (1) selon l'une des revendications 1 à 3, **caractérisé en ce que** l'agencement d'amplificateurs comprend un amplificateur collectif (14) qui tire son alimentation en tension du potentiel P1 et sa référence de masse du potentiel P4.

5. Rideau lumineux (1) selon l'une des revendications 1 à 4, **caractérisé en ce que** les éléments de commande sont formés par des bascules de commande (10.1, 10.2).

6. Rideau lumineux (1) selon l'une des revendications 1 à 5, **caractérisé en ce que** les éléments de commande sont adressables par les moyens de commande (9).

7. Rideau lumineux (1) selon la revendication 6, **caractérisé en ce qu'**un récepteur (6) est activé lorsque l'élément de commande associé est adressé.

8. Rideau lumineux (1) selon l'une quelconque des revendications 1 à 7, **caractérisé en ce que** les récepteurs (6) sont formés par des photodiodes (61, 62), chaque photodiode (61, 62) étant associée à une diode de découplage.

9. Rideau lumineux (1) selon la revendication 8, **caractérisé en ce que** les photodiodes (61, 62) avec les diodes de découplage peuvent être séparées du ou des préamplificateurs (13).

10. Rideau lumineux (1) selon la revendication 9, **caractérisé en ce que** les signaux d'interférence couplés de manière capacitive peuvent être séparés du ou des préamplificateurs (13).

11. Rideau lumineux (1) selon l'une quelconque des revendications 8 à 10, **caractérisé en ce que** la photodiode associée (61, 62) est activée et la diode de découplage associée est séparée par l'adressage d'un élément de commande.

12. Rideau lumineux (1) selon l'une des revendications 1 à 11, **caractérisé en ce que** les potentiels P1, P2, P3 sont chacun générés avec une unité d'alimentation 15a - c, les unités d'alimentation 15a - c étant reliées à une unité d'alimentation en tension (16).

13. Rideau lumineux (1) selon la revendication 12, **caractérisé en ce que** les unités d'alimentation 15a - c sont connectées individuellement ou conjointement à une unité d'alimentation de tension supérieure à celle des potentiels P1, P2, P3.

14. Rideau lumineux (1) selon l'une des revendications 12 ou 13, **caractérisé en ce que** les unités d'alimentation 15a - c sont disposées en cascade.

15. Rideau lumineux (1) selon l'une des revendications 1 à 14, **caractérisé en ce qu'**il est **caractérisé en ce qu'**il est conçu comme un rideau lumineux (1) de sécurité.
